# EUROPEAN PATENT APPLICATION

(11) **EP 3 517 496 A1**
(43) Date of publication of application: **31.07.2019**
(21) Application number: 17852569.7
(22) Date of filing: 08.02.2017
(51) Int. Cl.: C01B 3/38, C01B 3/48, H01M 8/0612

(54) **HYDROGEN GENERATOR**

(30) Priority: 20.09.2016 JP 2016182498
(71) Applicant: Panasonic Intellectual Property Management Co., Ltd., Osaka-shi, Osaka 540-6207 (JP)
(72) Inventor: TANIKAWA Masahiro, Osaka-shi, Osaka 540-6207 (JP); WAKAMATSU Hidetoshi, Osaka-shi, Osaka 540-6207 (JP)
(74) Representative: Grünecker Patent- und Rechtsanwälte PartG mbB
(86) International application number: PCT/JP2017/004486
(87) International publication number: WO 2018/055788

(57) **Abstract**

Hydrogen generator (1) includes: hydrogen generating chemical reaction vessel (2) that has a multi-cylinder structure having a central axis in the vertical direction; and thermal insulation container (3) that is provided with a bottomed cylindrical thermal insulator which is formed by compression molding a material containing an inorganic powder and which covers the bottom surface and the outer peripheral surface of hydrogen generating chemical reaction vessel (2). Furthermore, thermal insulation container (3) has metal upper lid (24) that covers the open upper surface of the thermal insulator, including the upper ends of the inner peripheral surface and the outer peripheral surface of the thermal insulator and metal lower lid (23) that covers the bottom surface of the thermal insulator, including the lower end of the outer peripheral surface of the thermal insulator. Further, thermal insulation container (3) has fiber sheet (25) that is configured to prevent scattering of the inorganic powder of the thermal insulator and that covers the outer peripheral surface of thermal insulation container (3).

## Description

### TECHNICAL FIELD

The present invention relates to a hydrogen generator for supplying hydrogen to a fuel cell power generator, and more particularly to a thermal insulation structure in the hydrogen generator.

### BACKGROUND ART

As a hydrogen generator for a fuel cell power generator, a steam reforming reaction type is generally used. This hydrogen generator includes a reformer that generates a reformed gas containing hydrogen as the main component by reacting the reforming water vaporized by a vaporizer with a material gas composed of hydrocarbon at a high temperature of about 600°C to 800°C and a converter that reduces, by a conversion shift reaction, the concentration of carbon monoxide gas contained in the reformed gas. This hydrogen generator further includes a carbon monoxide (CO) remover that reduces the concentration of carbon monoxide gas by a selective oxidation reaction.

Conventionally, it has been known that, in this type of hydrogen generator, by applying the article obtained by compression molding powdered fumed silica having high thermal insulation performance to the outer periphery thereof, the amount of heat leakage is suppressed and the energy efficiency is increased (for example, see PTL 1).

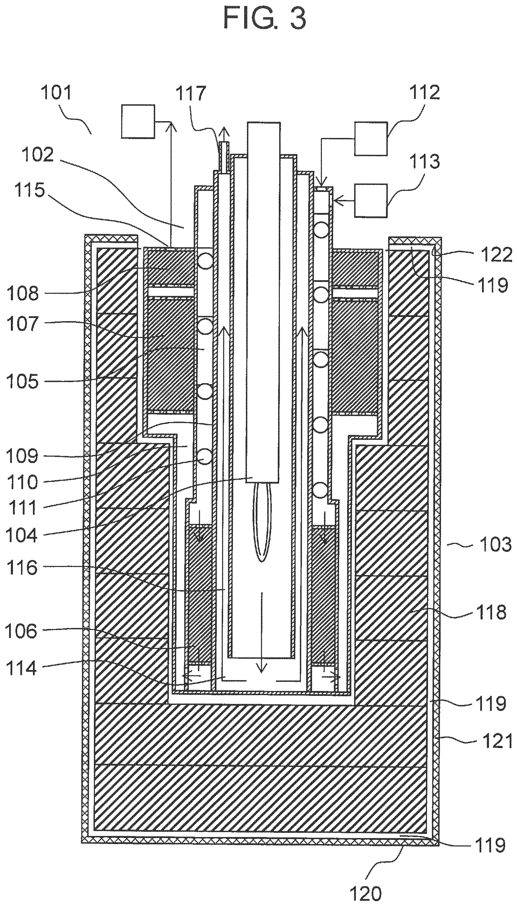

FIG. 3 is a longitudinal sectional view schematically illustrating the configuration of the conventional hydrogen generator disclosed in PTL 1. As shown in FIG. 3, conventional hydrogen generator 101 is constituted by hydrogen generating chemical reaction vessel 102 that has a multi-cylinder structure having a central axis in the vertical direction and bottomed cylindrical thermal insulation container 103 that covers the bottom surface and the outer peripheral surface of hydrogen generating chemical reaction vessel 102.

Hydrogen generating chemical reaction vessel 102 is composed of combustor 104, evaporator 105, reformer 106, converter 107, and CO remover 108. In evaporator 105, an evaporation flow path is constituted by inner cylinder 109, outer cylinder 110, and spiral partition 111 formed by spirally molding a round rod disposed between inner cylinder 109 and outer cylinder 110.

Evaporator 105 having this structure is supplied with material gas and reforming water. The material gas is supplied from material supply unit 112 and the water is supplied from reforming water supply unit 113. The water supplied to evaporator 105 is heated and evaporated by the combustion gas flowing through combustion gas flow path 114, and as a result, a mixed gas of the material gas with the steam is generated in evaporator 105.

The mixed gas passing through evaporator 105 passes through reformer 106 for performing reforming by a reforming reaction, converter 107 for reducing, by a conversion shift reaction, the concentration of carbon monoxide generated by the reforming reaction, and CO remover 108 for further reducing the concentration of carbon monoxide by a selective oxidation reaction, and is discharged from hydrogen discharge port 115.

The combustion gas generated in combustor 104 passes through combustion gas flow path 114 between combustion cylinder 116 and inner cylinder 109 and is discharged from combustion gas discharge port 117.

Hydrogen generating chemical reaction vessel 102 is thermally insulated by being contained within thermal insulation container 103.

Thermal insulation container 103 is configured by lower glass cloth 120, body glass cloth 121, and upper glass cloth 122 being attached to a laminate of a plurality of fumed-silica insulation boards 118 using adhesive 119 and integrally fixed.

### Citation List

### Patent Literature

PTL 1: Unexamined Japanese Patent Publication No. 2010-161047

### SUMMARY OF THE INVENTION

In the conventional configuration, hydrogen generating chemical reaction vessel 102 having a multi-cylinder structure having a central axis in the vertical direction is contained within thermal insulation container 103, and therefore, in order to avoid thermal radiation losses from the gap between hydrogen generating chemical reaction vessel 102 and thermal insulation container 103, thermal insulation container 103 having a cylindrical structure is required.

With respect to thermal insulation container 103, the plurality of fumed-silica insulation boards 118 each obtained by press molding fumed silica powder to about 60 mm are laminated in the longitudinal direction (vertical direction) and then a compressive load is applied to the whole in the lamination direction, thereby eliminating the gaps between the laminations and changing the height of the thermal insulation material to a predetermined thickness. Further, a glass cloth sheet (lower glass cloth 120, body glass cloth 121, upper glass cloth 122) coated with adhesive 119 is attached to the outer periphery of the laminate of fumed-silica insulation boards 118 to form an integrated structure, thereby preventing heat leakage from lamination interfaces.

When attaching lower glass cloth 120, body glass cloth 121, and upper glass cloth 122, which are coated with adhesive 119, to the outer periphery of the laminate of fumed-silica insulation boards 118, it is necessary to cover up to the edges of the laminate of fumed-silica insulation boards 118 with lower glass cloth 120 and upper glass cloth 122.

Furthermore, in order to continuously cover the curved surface (outer peripheral surface) and the flat surfaces (upper surface and bottom surface) of the laminate of fumed-silica insulation boards 118, a plurality of slits are formed in the glass cloth sheet (lower glass cloth 120, body glass cloth 121, upper glass cloth 122), and the glass cloth sheet is attached so as to follow the cylindrical shape of the laminate. Therefore, the time required for attaching the glass cloth sheet becomes considerable.

In addition, when attaching the glass cloth sheet, the process of pressing the glass cloth sheet (lower glass cloth 120, body glass cloth 121, upper glass cloth 122) coated with adhesive 119 against the outer peripheral surface of the laminate of fumed-silica insulation boards 118 is required, and there has been concern about breakage of fumed-silica insulation boards 118.

There has been also concern that, when transporting thermal insulation container 103 or inserting hydrogen generating chemical reaction vessel 102 into thermal insulation container 103, the side surface of thermal insulation container 103, particularly the edges of thermal insulation container 103 may make contact with hydrogen generating chemical reaction vessel 102 or the surrounding objects, causing breakage of thermal insulation container 103 or fumed-silica insulation boards 118.

There has been a problem that, in the event of breakage of fumed-silica insulation boards 118 constituting thermal insulation container 103, the fixed thickness of thermal insulation container 103 cannot be maintained or heat leakage from the gaps in the laminate occurs, leading to unstable thermal insulation performance.

The present invention provides a hydrogen generator having high practical utility such that the amount of heat leakage can be minimized more efficiently at low cost and such that the edges of a bottomed cylindrical thermal insulator covering the bottom surface and the outer peripheral surface of a hydrogen generating chemical reaction vessel are less prone to breakages.

The hydrogen generator of the present invention includes: a hydrogen generating chemical reaction vessel that has a multi-cylinder structure having a central axis in the vertical direction; and a thermal insulation container that is provided with a bottomed cylindrical thermal insulator which is formed by compression molding a material containing an inorganic powder and which covers the bottom surface and the outer peripheral surface of the hydrogen generating chemical reaction vessel. Furthermore, the thermal insulation container has a metal upper lid that covers the open upper surface of the thermal insulator, including the upper ends of the inner peripheral surface and the outer peripheral surface of the thermal insulator, and a metal lower lid that covers the bottom surface of the thermal insulator, including the lower end of the outer peripheral surface of the thermal insulator. Further, the thermal insulation container has a fiber sheet that is configured to prevent scattering of the inorganic powder and that covers the outer peripheral surface of the thermal insulator.

In this configuration, the ends (edges) of the bottomed cylindrical thermal insulator covering the bottom surface and the outer peripheral surface of the hydrogen generating chemical reaction vessel are covered with the metal upper lid and the metal lower lid. It is thus possible to provide a hydrogen generator having high practical utility such that the amount of heat leakage is minimized more efficiently at low cost and such that the edges of the bottomed cylindrical thermal insulator are less prone to breakages.

In addition, since the ends (edges) of the bottomed cylindrical thermal insulator covering the bottom surface and the outer peripheral surface of the hydrogen generating chemical reaction vessel are covered with the metal upper lid and the metal lower lid, it is possible to eliminate the step of continuously covering the curved surface (outer peripheral surface) and the flat surfaces (upper surface and bottom surface) of the bottomed cylindrical thermal insulator with the fiber sheet, that is, the step of attaching the fiber sheet. Therefore, it is possible to greatly reduce the number of man-hours and improve productivity.

### BRIEF DESCRIPTION OF DRAWINGS

FIG. 1 is a longitudinal sectional view schematically illustrating the configuration of a hydrogen generator according to an exemplary embodiment of the present invention.
FIG. 2 is a longitudinal sectional view schematically illustrating the configuration of a thermal insulation container of the hydrogen generator according to the exemplary embodiment of the present invention.
FIG. 3 is a longitudinal sectional view schematically illustrating the configuration of a conventional hydrogen generator.

### DESCRIPTION OF EMBODIMENT

Hereinafter, a hydrogen generator according to an exemplary embodiment of the present invention will be described with reference to the accompanying drawings. It should be noted that this exemplary embodiment is not intended to limit the present invention.

### (Exemplary embodiment)

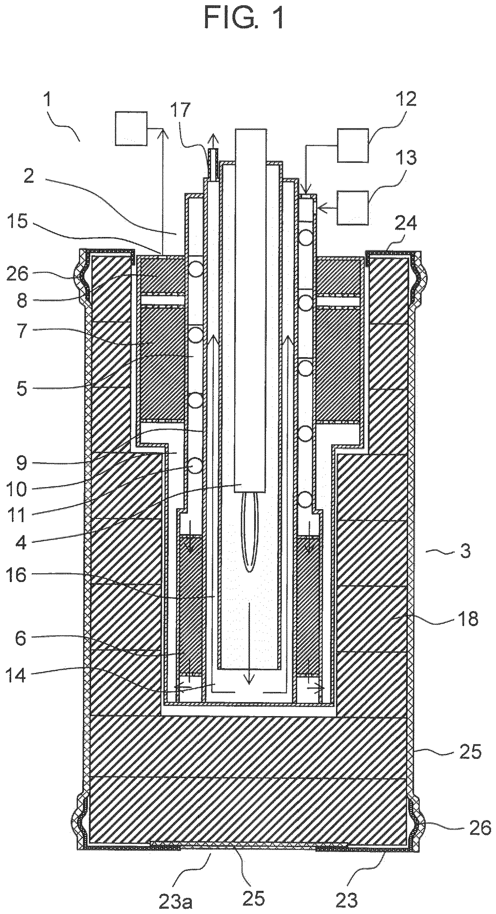

FIG. 1 shows a longitudinal sectional view schematically illustrating the configuration of a hydrogen generator according to an exemplary embodiment of the present invention.

As shown in FIG. 1, hydrogen generator 1 according to the present exemplary embodiment includes: hydrogen generating chemical reaction vessel 2 that has a multi-cylinder structure having a central axis in the vertical direction; and thermal insulation container 3 that is provided with fumed-silica insulation boards 18 serving as a bottomed cylindrical thermal insulator which is formed by compression molding a material containing an inorganic powder and which covers the bottom surface and the outer peripheral surface of hydrogen generating chemical reaction vessel 2. Furthermore, thermal insulation container 3 has: upper lid 24 that is made of metal, and covers the open upper surface of the thermal insulator, including the upper ends of the inner peripheral surface and the outer peripheral surface of the thermal insulator; lower lid 23 that is made of metal, and covers the bottom surface of the thermal insulator, including the lower end of the outer peripheral surface of the thermal insulator; and fiber sheet 25 that is configured to prevent scattering of the inorganic powder forming the thermal insulator, and covers the outer peripheral surface of the thermal insulator.

In addition, lower lid 23 has opening 23a for exposing a portion (central portion) of the bottom surface of thermal insulation container 3, and fiber sheet 25 also covers the portion (central portion) of the bottom surface of the thermal insulator and prevents the inorganic powder from scattering from opening 23a of lower lid 23. Further, upper lid 24 and lower lid 23 have large-diameter portions 26 on the outer peripheral surfaces thereof, excluding the upper and lower ends.

Thermal insulation container 3 is disposed so as to contain hydrogen generating chemical reaction vessel 2, and hydrogen generating chemical reaction vessel 2 has a bottom surface and an entire outer peripheral surface being thermally insulated by thermal insulation container 3.

Hydrogen generating chemical reaction vessel 2 is provided with evaporator 5 that mixes the reforming material supplied from material supply unit 12 and the reforming water supplied from reforming water supply unit 13 and vaporizes the mixture and reformer 6 that reforms the vaporized reforming material by a reforming reaction. Hydrogen generating chemical reaction vessel 2 is also provided with: converter 7 that reduces, by a conversion shift reaction, the concentration of carbon monoxide generated by the reforming reaction; CO remover 8 that further reduces, by a selective oxidation reaction, the concentration of the unreacted carbon monoxide passing through converter 7; and combustor 4 that is provided with a burner.

In evaporator 5, an evaporation flow path is constituted by inner cylinder 9, outer cylinder 10, and spiral partition 11 formed by spirally molding a round rod provided between inner cylinder 9 and outer cylinder 10. The water supplied to evaporator 5 is heated and evaporated by the combustion gas flowing through combustion gas flow path 14, and as a result, a mixed gas of material gas with steam is generated in evaporator 5. Then the mixed gas passing through evaporator 5 passes through reformer 6 for performing reforming by a reforming reaction, converter 7 for oxidizing the carbon monoxide generated by the reforming reaction, and CO remover 8 for oxidizing the carbon monoxide, and is discharged from hydrogen discharge port 15.

Furthermore, the combustion gas generated in combustor 4 passes through combustion gas flow path 14 between combustion cylinder 16 and inner cylinder 9 and is discharged from combustion gas discharge port 17.

Reformer 6, converter 7, and CO remover 8 serve as a chemical reaction unit. The hydrogen gas generated by the chemical reaction unit is discharged from hydrogen discharge port 15. Combustor 4, evaporator 5, reformer 6, converter 7, and CO remover 8 are housed within a stainless-steel cylinder and constitute hydrogen generating chemical reaction vessel 2.

Reformer 6 carries a catalyst that promotes the reforming reaction. As the reforming catalyst, precious metals, such as platinum, palladium, and rhodium, or an alloy thereof may be used. Reformer 6 is maintained at about 700°C by the thermal energy from combustor 4 in order to perform the reforming reaction.

Converter 7 carries a catalyst that promotes the shift reaction. As the shift catalyst, low-temperature catalysts, such as copper based catalysts, and high-temperature catalysts, such as iron-based catalysts, are known, and by combining these catalysts, the shift reaction can be promoted effectively. The shift reaction is performed at about 300°C.

CO remover 8 carries a carbon monoxide selective oxidation catalyst. As this catalyst, platinum, ruthenium, palladium, gold, or an alloy with these as a first element may be used. By CO remover 8, the concentration of carbon monoxide in the gas can be reduced to about several ppm.

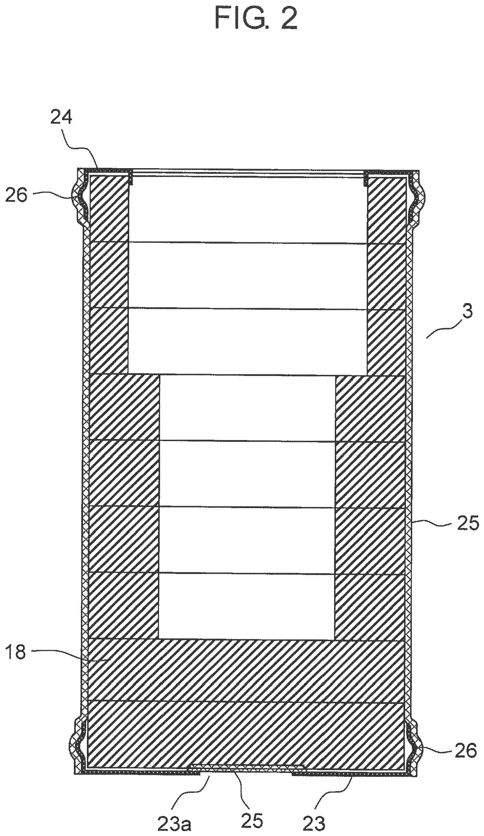

FIG. 2 is a longitudinal sectional view schematically illustrating the configuration of thermal insulation container 3 of hydrogen generator 1 according to the exemplary embodiment of the present invention.

In FIG. 2, each of fumed-silica insulation boards 18 serving as the thermal insulator constituting thermal insulation container 3 is a pressure molded body of fumed silica (5 nm to 30 nm, spherical) having a microporous structure, for example, equal to or less than 100 nm, the solid particles being in point contact, the heat transfer path being minimum. Additionally, fumed-silica insulation board 18 has a structure such that micropores block convection and molecular collision of gas, and is obtained by molding, with a thickness of 60 mm, the material having a thermal conductivity of 0.025 W/(m·k) at the average temperature of 300°C of the outer periphery of the reformer.

Next, a method for manufacturing hydrogen generator 1 according to the present exemplary embodiment will be described.

Firstly, fiber sheet 25 is attached to the upper surface of lower lid 23 made of metal so as to cover the opening of lower lid 23, and then the plurality of fumed-silica insulation boards 18 are laminated upon lower lid 23, and upper lid 24 made of metal and having a doughnut disk shape is disposed at the upper end of the laminate.

At this time, lower lid 23 covers the outer periphery of the bottom surface of lowest fumed-silica insulation board 18 having a columnar shape, including the lower end of the outer peripheral surface of lowest fumed-silica insulation board 18.

Furthermore, upper lid 24 covers the upper surface of highest fumed-silica insulation board 18 having a cylindrical shape, including the upper end of the outer peripheral surface of highest fumed-silica insulation board 18.

Then fiber sheet 25 (glass cloth sheet coated with an adhesive) of such dimensions as to simultaneously cover the large diameter portion 26 of lower lid 23 and the large diameter portion 26 of upper lid 24 in this state is attached to the outer peripheral surface of the laminate of fumed-silica insulation boards 18 sandwiched between lower lid 23 and upper lid 24. Through this operation, laminated fumed-silica insulation boards 18, lower lid 23, and upper lid 24 are integrated by fiber sheet 25, thereby constituting thermal insulation container 3.

Then hydrogen generating chemical reaction vessel 2 is inserted into the inside of thermal insulation container 3 from above thermal insulation container 3, and thus hydrogen generator 1 can be completed.

As described above, hydrogen generator 1 of the present exemplary embodiment includes hydrogen generating chemical reaction vessel 2 that has a multi-cylinder structure having a central axis in the vertical direction and thermal insulation container 3 that is provided with fumed-silica insulation boards 18 serving as a bottomed cylindrical thermal insulator which is formed by compression molding a material containing an inorganic powder and which covers the bottom surface and the outer peripheral surface of hydrogen generating chemical reaction vessel 2. Furthermore, thermal insulation container 3 has: upper lid 24 that is made of metal, and covers the open upper surface of the thermal insulator, including the upper ends of the inner peripheral surface and the outer peripheral surface of the thermal insulator; lower lid 23 that is made of metal, and covers the bottom surface of the thermal insulator, including the lower end of the outer peripheral surface of the thermal insulator; and fiber sheet 25 that is configured to prevent scattering of the inorganic powder and covers the outer peripheral surface of thermal insulation container 3.

In the above-described configuration, the ends (edges) of the bottomed cylindrical thermal insulator covering the bottom surface and the outer peripheral surface of hydrogen generating chemical reaction vessel 2 are covered with upper lid 24 and lower lid 23 each made of metal. Thus, hydrogen generator 1 is provided such that the amount of leakage heat is minimized more efficiently at low cost and such that the edges of the bottomed cylindrical thermal insulator are less prone to breakages.

In addition, since the ends (edges) of the bottomed cylindrical thermal insulator covering the bottom surface and the outer peripheral surface of hydrogen generating chemical reaction vessel 2 are covered with upper lid 24 and lower lid 23 each made of metal, it is possible to eliminate the step of continuously covering the curved surface (outer peripheral surface) and the flat surfaces (upper surface and bottom surface) of the bottomed cylindrical thermal insulator with fiber sheet 25 (the step of attaching fiber sheet 25). It is therefore possible to greatly reduce the number of man-hours and improve productivity.

Further, in hydrogen generator 1 of the present exemplary embodiment, lower lid 23 has opening 23a for exposing a portion (central portion) of the bottom surface of fumed-silica insulation board 18 serving as the thermal insulator, and fiber sheet 25 also covers the bottom surface of fumed-silica insulation board 18 serving as the thermal insulator and prevents the inorganic powder from scattering outwardly from opening 23a of lower lid 23.

Since lower lid 23 has opening 23a for exposing a portion of the bottom surface of fumed-silica insulation board 18 serving as the thermal insulator, it is possible to reduce the heat transmitted from the central portion of lower lid 23 to the outer peripheral portion and provide higher heat insulation performance.

In addition, by fiber sheet 25 provided at the bottom surface of thermal insulation container 3, the inorganic powder can be prevented from scattering outwardly from opening 23a of lower lid 23.

It should be noted that upper lid 24 and lower lid 23 need not entirely be made of metal, and it is sufficient that at least the portion for covering the edges of fumed-silica insulation board 18 serving as the bottomed cylindrical thermal insulator is made of metal. The arrangement may be such that the portion for covering the edges of the bottomed cylindrical thermal insulator is made of metal, the other portion is made of resin, and these are integrally formed.

For example, upper lid 24 may be constituted by a metal large ring for covering the outer edge of the bottomed cylindrical thermal insulator, a metal small ring for covering the inner edge of the bottomed cylindrical thermal insulator, and a resin disc integrally molded therewith. In that case, the transfer of heat from the metal small ring, which rises to a relatively high temperature, to the relatively low temperature metal large ring can be suppressed by the resin disc.

In the present exemplary embodiment described above, it is possible to configure a thermal insulation container having a higher strength at low cost, and it is also possible to provide the thermal insulation container for the hydrogen generator, wherein heat leakage is less likely to occur and stable thermal insulation performance is maintained.

As described above, the hydrogen generator of the present invention has a hydrogen generating chemical reaction vessel that has a multi-cylinder structure having a central axis in the vertical direction and a thermal insulation container that is provided with a bottomed cylindrical thermal insulator which is formed by compression molding a material containing an inorganic powder and which covers the bottom surface and the outer peripheral surface of the hydrogen generating chemical reaction vessel. Furthermore, the thermal insulation container has: an upper lid that is made of metal, covers the open upper surface of the thermal insulator, including the upper ends of the inner peripheral surface and the outer peripheral surface of the thermal insulator; and a lower lid that is made of metal, and covers the bottom surface of the thermal insulator, including the lower end of the outer peripheral surface of the thermal insulator. Further, the thermal insulation container has a fiber sheet that is configured to prevent scattering of the inorganic powder and that covers the outer peripheral surface of the thermal insulator.

The ends (edges) of the bottomed cylindrical thermal insulator covering the bottom surface and the outer peripheral surface of the hydrogen generating chemical reaction vessel are covered with the upper lid and the lower lid each made of metal. It is thus possible to provide the hydrogen generator such that the amount of heat leakage is suppressed more efficiently at low cost and the edges of the bottomed cylindrical thermal insulator are less prone to breakages.

In addition, since the ends (edges) of the bottomed cylindrical thermal insulator covering the bottom surface and the outer peripheral surface of the hydrogen generating chemical reaction vessel are covered with the upper lid and the lower lid each made of metal, it is possible to eliminate the step of continuously covering the curved surface (outer peripheral surface) and the flat surfaces (upper surface and bottom surface) of the bottomed cylindrical thermal insulator with the fiber sheet, that is, the step of attaching the fiber sheet. Therefore, it is possible to greatly reduce the number of man-hours and improve productivity.

As the thermal insulator, a laminate of articles obtained by processing a porous body, which is formed by compression molding a material containing an inorganic powder and has a gas phase ratio of around 90%, into a plate shape, may be used. In addition, known materials can also be used according to applications or requisite characteristics.

It should be noted that it is only necessary that at least the portion of each of the upper lid and the lower lid which covers the edges of the bottomed cylindrical thermal insulator be made of metal.

Furthermore, the hydrogen generator of the present invention may be configured such that the lower lid has an opening for exposing a portion of the bottom surface of the thermal insulator constituting thermal insulation container and such that the fiber sheet also covers the bottom surface of the thermal insulator and prevents the inorganic powder from scattering from the opening of the lower lid.

The lower lid has the opening for exposing a portion of the bottom surface of the thermal insulator, and it is thus possible to reduce the heat transmitted from the central portion of the lower lid to the outer peripheral portion and provide higher heat insulation performance.

In addition, by the fiber sheet provided at the bottom surface of the thermal insulator, the inorganic powder can be prevented from scattering outwardly from the opening of the lower lid.

### INDUSTRIAL APPLICABILITY

The present invention has high practical utility, such as stable thermal insulation performance by increasing the strength at low cost, and is particularly suitable for hydrogen generators having a multi-cylinder structure.

### REFERENCE MARKS IN THE DRAWINGS

1, 101: hydrogen generator
2, 102: hydrogen generating chemical reaction vessel
3, 103: thermal insulation container
4, 104: combustor
5, 105: evaporator
6, 106: reformer
7, 107: converter
8, 108: CO remover
9, 109: inner cylinder
10, 110: outer cylinder
11, 111: spiral partition
12, 112: material supply unit
13, 113: reforming water supply unit
14, 114: combustion gas flow path
15, 115: hydrogen discharge port
16, 116: combustion cylinder
17, 117: combustion gas discharge port
18, 118: fumed-silica insulation board (thermal insulator)
23: lower lid
23a: opening
24: upper lid
25: fiber sheet
26: large diameter portion
119: adhesive
120: lower glass cloth
121: body glass cloth
122: upper glass cloth

## Claims

1. A hydrogen generator comprising:
a hydrogen generating chemical reaction vessel that has a multi-cylinder structure having a central axis in a vertical direction; and
a thermal insulation container that is provided with a bottomed cylindrical thermal insulator formed by compression molding a material containing an inorganic powder, the bottomed cylindrical thermal insulator covering a bottom surface and an outer peripheral surface of the hydrogen generating chemical reaction vessel,
wherein the thermal insulation container has:
an upper lid that is made of metal, and covers an open upper surface of the thermal insulator, including upper ends of an inner peripheral surface and an outer peripheral surface of the thermal insulator;
a lower lid that is made of metal, and covers a bottom surface of the thermal insulator, including a lower end of the outer peripheral surface of the thermal insulator; and
a fiber sheet that is configured to prevent scattering of the inorganic powder and covers the outer peripheral surface of the thermal insulator.

2. The hydrogen generator according to claim 1, wherein:
the lower lid has an opening for exposing a portion of the bottom surface of the thermal insulator; and
the fiber sheet also covers the bottom surface of the thermal insulator and prevents the inorganic powder from scattering from the opening of the lower lid.
